# EUROPEAN PATENT SPECIFICATION

(11) **EP 1 496 072 B1**
(45) Date of publication and mention of the grant of the patent: **02.11.2005**
(21) Application number: 03015880.2
(22) Date of filing: 11.07.2003
(51) Int. Cl.: C08G 18/12, C08G 18/73, C08G 18/32, C09D 11/02

(54) **A polyurethane resin for white inks**
Polyurethanharz für weisse Tinten
Résine de polyuréthane pour les encres blanches

(43) Date of publication of application: 12.01.2005
(73) Proprietor: SICPA HOLDING S.A., 1008 Prilly (CH)
(72) Inventor: Eugène, Denis, 74800 La Roche sur Foron (FR); Eiselé, Gilles, 74250 Fillinges (FR); Catherin, Gilles, 01630 St. Genis Pouilly (FR)
(74) Representative: Welch, Andreas

(56) References cited:
- EP-A- 1 229 090
- WO-A-01/14442
- WO-A-02/38643

## Description

The present invention relates to a polyurethane resin for white inks, to a coating composition comprising said polyurethane resin, to the use of said polyurethane resin for printing plastic substrates, to a method of producing a polyurethane resin and to a method of producing a laminate carrying a printed image, according to the preamble of the independent claims.

Polyurethane resins are the binders of choice in solvent borne coating compositions for plastic films and in the production of image carrying laminates. Laminates are multilayered shaped articles in which - according to the needs of the final article -each of the layers consist either of the same or of different materials. The preferred materials are paper, wood, textiles, metal and plastic films. In the field of food packaging, the laminates are mostly made from plastic or metal films, in particular metallized films, or a combination of both. Film materials are chosen such that the laminates can be subjected to sterilization processes without deterioriation of the film and/or the laminate. As a further advantage laminates impart to prints or generally images a satisfying appearance with respect to gloss and color fastness. Generally laminates are produced by either joining two or more layers by means of adhesives or by adhesive-free extrusion coating. Irrespective of the production process a print or generally any kind of image which does not necessarily have to be printed can be applied to one or both of the layers prior to applying the next layer (Römpp Lexikon, Lacke und Druckfarben, ed. U.Zorll, Georg Thieme Verlag, Stuttgart, New York 1998, p.214 and 318).

Coating compositions for laminates, which are mainly in the form of printing inks, have to satisfy high standards. The resin as the film forming part of the composition must provide the dried layer with the required adhesive strength both to the underlying substrate and to the adhesive or to the extruded layer. As a further requirement the resin must impart to the dried layer stability during and after sterilization processes and/or treatment in boiling water even over a prolonged period of time (e.g. during food preparation). Further the dried layer must show blocking resistance and stability during sealing of the laminate (e.g. in the production of bags). The composition - as a printing ink -must be printable in flexo and gravure printing processes which are the techniques commonly used for printing plastic films. Thus, the resin must allow the printing ink to be thinly liquid, rapidly drying and to be soluble in esters and in alcohols, in particular in ethanol.

Suitable polyurethane resins are known, for example, from EP-A-0 604 890, WO 01/14442 or WO 02/38643.

It has now surprisingly been found that polyurethane resins as defined in the independent claims are particularly favorable for the preparation of white inks.

Thus, the present invention is related to a polyurethane resin which is obtainable by
a) reacting an excess of one or more aliphatic diisocyanates with a group of isocyanate-reactive components consisting of one or more polyether polyols each having an average molecular weight in the range of not more than 2000 g/mol, and at least one diamine so as to obtain a prepolymer; and
b) adding a mixture of isophorone diamine and a second diamine selected from the group consisting of ethylenediamine, 1,2-diaminocyclohexane and 2,2,4- or 2,4,4-trimethyldiiaminohexane (TMDA) in excess to the free NCO groups of the prepolymer obtained in step a).

According to the present invention, all molecular weights are weight average molecular weights. When ranges are given, the respective boundaries are understood to be included.

The term "aliphatic diisocyanate" is to be understood as to comprise straight-chain aliphatic, branched aliphatic as well as cycloaliphatic diisocyanates. Preferably, the diisocyanate comprises 1 to 10 carbon atoms. Examples of preferred diisocyanates are 1,4-diisocyanatobutane, 1,6-diisocyanatohexane, 1,5-diisocyanato-2,2-dimethylpentane, 4-trimethyl-1,6-diisocyanatohexane, 1,10-diisocyanatodecane, 1,3- and 1,4-diisocyanatocyclo-hexane, 1-isocyanato-5-isocyanatomethyl-3,3,5-trimethylcyclohexane (isophorone diisocyanate (IPDI)), 2,3- 2, 4- and 2,6-diisocyanato-1-methylcyclohexane, 4,4'-and 2,4'-diisocyanatodicyclohexylmethane, 1-isocyanato-3-(4)-isocyanatomethyl-1-methyl- cyclohexane, 4,4'- and 2,4'-diisocyanatodiphenylmethane, and mixtures thereof, or 2,2,4- or 2,4,4-trimethyldiisocyanatohexane (TMDI).

The polyetherpolyol components of the polyurethane resin of present invention are generally defined by the formula 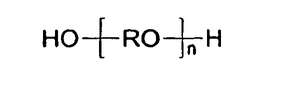 wherein R is a C₂ to C₁₀ straight chain or branched hydrocarbon group. Preferably, R is an alkylene group comprising 2 to 4 carbon atoms. Examples of preferred polyether polyols include polyethyleneether glycols (PEG), polypropyleneether glycols (PPG) and polytetramethylene ether glycols (Poly-THF), or a mixture thereof. According to the present invention, the use of Poly-THF is particularly preferred. In the above formula, n is chosen such that the average molecular weight of the polyether polyols is not more than 2000 g/mol, preferably less than 1500 g/mol, and more preferably 1000 g/mol or less. An especially preferred polyetherpolyol of the present invention is Poly-THF 1000.

In the first step, as a further isocyanate-reactive component at least one diamine is added. The diamine can be any aliphatic, cycloaliphatic, aromatic, or heterocyclic diamine having primary or secondary amino groups. According to the present invention, hydrazine is not comprised by the group of diamines. Example are ethylenediamine, 1,2-diaminopropane, 1,3-diaminopropane, diaminobutane, hexamethylenediamine, 1,4-diaminocyclohexane, 3-aminomethyl-3,5,5-trimethylcyclohexylamine (isophorone diamine), m-xylylene diamine or 1,3-bis (aminomethyl) cyclohexane. According to the present invention, isophorone diamine is particularly preferred.

Optionally, in the first step as a further isocyanate-reactive component one or more polyols each having an average molecular weight of equal or less than 800 g/mol can be added. According to the present invention, the term polyol is to be understood to comprise chemical substances having at least two hydroxyl groups. According to the present invention, diols such as 1,4-butanediol, 1,6-hexanediol, neopentyl glycol, dihydroxy polyetherpolyols, polyesterpolyols or the like are preferred as polyol component.

The one or more diisocyanates and the isocyanate-reactive components are reacted with each other to form a first isocyanate-terminated prepolymer. Therefore, an excess of one or more diisocyanates is reacted with the isocyanate-reactive components. According to the present invention, the ratio of equivalent weights of diisocyanate components to isocyanate-reactive components is in a range of between 3,6: 1 and 1,1:1, preferably in a range of between 2:1 and 1,1:1.

According to the present invention, the isocyanate-reactive components may be added in parallel or sequentially to the diisocyanate(s). In case of a sequential addition of the isocyanate-reactive components, it is preferred to first add the polyether polyol components are added, followed by the addition of the diamine component(s) and optionally by the addition of the at least one polyol.

The reaction is carried out under conditions which are well known to those skilled in the art. According to a preferred embodiment, the reaction is carried out in the presence of a solvent using well-known catalysts.

Examples of suitable solvents are alkyl acetates such as methyl acetate, ethyl acetate, propyl acetate, butyl acetate and pentyl acetate. The total amount of solvent typically ranges from 0 to 90 percent by weight of the reaction mixture, preferably from 25 to 60 percent by weight of the reaction mixture.

A catalyst may be advantageously employed to accelerate the reaction of diisocyanate with diol. Suitable catalysts are tin derivatives such as stannous octylate, stannous oxalate, dibutyltin dilaurate, zinc derivatives such as zinc diacetate, zinc bisacetyl acetonate or Organotitanium compounds such as tetrabutytitanate, or mixtures thereof.

Further additives may be present. For example, an antioxidant such as Irganox 1076 (octadecyl-3,5-di-t-butyl-4-hydroxyhydrocinnamate) may be added.

Formation of the isocyanate-terminated prepolymer is generally carried out at a temperature ranging from 0 to 130°C, preferably ranging from 50 to 90°C. The time of the reaction generally ranges from a period of from 1 to 12 hours, preferably from 1 to 4 hours.

The thus formed isocyanate-terminated prepolymer is chain-extended with a mixture of isophorone diamine (IPDA) and second diamine selected from the group consisting of ethylenediamine (EDA), 1,2-diaminocyclohexane and 2,2,4- or 2,4,4-trimethyldiiaminohexane (TMDA). 1,2-diaminocyclohexane is sold by DuPont under the tradename DCH99. It has been surprisingly found that by using this mixture a particularly suitable polyurethane resin can be obtained. According to the present invention, the ratio of the second diamine to IPDA in step b) is preferably 10:1 to 2:1, especially 5:1 to 3:1. The mixture of diamines is added in excess to the free NCO-groups (isocyanate groups) of the isocyanate-terminated prepolymer so that ensure that all of the NCO groups undergo reaction. According to the present invention, preferably the ratio of equivalent weights of the isocyanate-terminated prepolymer to the mixture of diamine components is in a range of between 1:5 and 1:1,1, preferably in a range of between 1:4 and 1:1,1.

The reaction is carried out under conditions which are well known to those skilled in the art. According to a preferred embodiment, the reaction is carried out by adding the diamines dissolved in one of the solvents mentioned above to the reaction mixture. The reaction is generally carried out at a temperature ranging from 0 to 90°C, preferably from 25 to 75°C, for 5 minutes to 2 hours.

According to an especially preferred embodiment of the invention, the mixture of diamines is added to the prepolymer in two separate steps. In a first step, approximately one third to about 50% of said mixture of diamines dissolved in one of the solvents mentioned above is added to the prepolymer at elevated temperatures of between 60 and 90°C. After reacting for a sufficient amount of time, for example about 5 minutes to 1 hour, the temperature is lowered to about 60-35°C, and the balance of said mixture of diamines dissolved in one of the solvents mentioned above is added. As a preferred solvent, ethylacetate is used for both steps.

Optionally, the final product can be diluted in a solvent such as an alcohol, preferably ethanol, or an ester such as n-propyl acetate, in order to obtain a clear solution.

The thus prepared polyurethane resin has a weight average molecular weight in the range of 20000 to 80000 g/mol, preferably between 25000 to 55000 g/mol. The resin is soluble in organic solvents comprising alcohols such as ethanol. The resin according to the present invention preferably has a degree of urethanisation between 20 and 30%. Thus, the polyurethane resin of the present invention is characterized by an increased hardness.

The polyurethane resin allows the printing ink to be easily adjusted to the needs of flexographic and gravure printing. Such an ink is soluble in alcohols, e.g. in ethanol, has a low viscosity, thus is thinly liquid, with a viscosity preferably between 30 to 100 seconds in a Cup 4 at 23°C or 80 to 350 mPa·s at 23°C.

Depending on the chemical structure of the polyurethane resin and thus on the chemical nature of the reactands and their respective ratios to each other the printing inks are adjustable to the needs of different kinds of plastic substrates and/or application methods.

Besides the polyurethane resin according to the present invention, the printing ink comprises components commonly used for flexographic and gravure printing inks. The main components beside the polyurethane resin are a white pigment, at least one solvent and additionally additives such as wax. The white pigment is preferably TiO₂, such as Finntitan commcercially available from Finntitan Oy.

In the printing inks, a resin such as nitrocellulose may be used as a carrier for the dye or pigment.

According to the present invention, commonly used solvents such as alcohols, for example, ethanol or isopropanol, may be used.

To the printing inks, commonly used additives may be added. Examples are surfactants, plasticizers, stabilizers or waxes may be used. The use of at least one wax additive is preferred.

The term "film forming" is defined according to DIN 55945: 1996-09. Film forming is the generic term for the transition of a coating layer from the liquid to the solid state. Film forming occurs by means of physical drying and/or curing. Both processes proceed simultaneously or one after the other. The polyurethane resin of the present invention is film forming under standard conditions (25°C, minimum 40% relative humidity). Whereas the term "drying" is more related to the process engineering used for drying the liquid layer, such as ovens and temperatures, the term "curing" is related to the chemical processes within the resin during the drying process. The polyurethane of the present invention is of the non-crosslinking type.

"Initial adhesion" is defined as being the adhesion immediately after drying and up to 30 seconds maximum after drying of the layer.

"Drying" means substantial removal of the solvent from the layer. The latter is one of the requirement that the layer becomes solid. The residual solvent in the layer is not more than 10% by weight of the weight of the overal solvent. A dried layer is a layer of a thickness between 4 and 6 µm in particular 5 µm after treatment in an IR-oven by 70 - 80°C for less than one minute. In the solid state the layer is tack-free. In case the layer is thicker or thinner either the oven temperature has to be increased/decreased or the duration of heat treatment has to be adapted correspondingly.

"Layer" and "image" are used synonymously throughout the specification. Layers and images are in form of pictures, writings, overprints,(overprint varnishes) and their meaning should not be limited by their form, extension and thickness.

In the context of the present invention all technical terms shall be defined according to Römpp Lexikon, ed. U.Zoll, Georg Thieme Verlag Stuttgart, 1998.

The present invention further encompasses a method of producing a laminate carrying a printed image, said method comprises the step of
a) providing a printing ink comprising at least one organic solvent and at least one polyurethane resin of the present invention as at least one film forming binder and
b) applying a layer to a first substrate by printing said printing ink provided in step (a) in a flexographic and/or gravure printing process to said first substrate
c) removing said solvent from said layer applied in step (b) thereby drying and/or curing the layer
d) applying an adhesive to the layer of step (c) and finishing the laminate by applying a second substrate on the adhesive.

Preferably, the first and the second substrates are of a plastic material, preferably of polyolefinic nature. The first and the second substrate can also be of different chemical nature like polyester or polyamide such as Nylon.

According to the present invention, as an adhesive in this process can be used any conventional solvent-free adhesive or solvent-based adhesive.

The adhesives are applied to the layer according to conventional methods, for example by using a hand coater. Alcohol-based adhesives are preferably diluted with a conventional diluent before application. Preferably, a solution containing 20 % by weight to 80 by weight, more preferably 30 by weight to 60 by weight of the adhesive is prepared hereby.

In the case of those adhesives, it is preferred according to the present invention to apply said adhesive to the printed layer of a substrate, and then to finish the laminate by applying a second substrate on the adhesive. In the case of a solvent-free adhesive, however, it is more preferred to apply said adhesive to an unprinted layer of a substrate, and then to finish the laminate by applying the printed layer of a second substrate to the adhesive.

Further part of the present invention is therefore a laminate produced by the method mentioned hereinbefore. Of course, the laminate can also be produced by extruding the second substrate on the first substrate carrying the dried layer. This method does not call for an adhesive.

If necessary, the ink composition of the present invention can contain additional binder resins, e.g. cellulosic resins, acrylic resins, polyvinyl chloride.

### Examples

The present invention is hereinafter further illustrated with the aid of non-limiting examples. Unless otherwise indicated, all percentages are weight percents.

### Example 1: Synthesis of the polyurethane resin

A five-neck flask equipped with two additions funnels, a gas introduction means, an agitator and a thermometer was charged with a mixture of 822 g (60 wt.-%) ethyl acetate and 1,5 g (0.1 wt.-%) Irganox 1076. The mixture was thermostated at 25°C at an agitation velocity of 60 rpm and an nitrogen stream of 0.4m³/h. The temperature was increased to 60°C and a mixture of 119 g (1,037 eq) of IPDI and 0,45 g (0.03 wt.-%) zinc bisacetyl acetonate (catalyst) was added to the flask. The agitation velocity was increased to 90 rpm. To the isocyanate solution, 296 g (0,592 eq) Poly-THF 1000 were added over a period of 10 minutes. The reaction was conducted by a temperature of 60 to 75°C for about 90 to 180 minutes. Thereafter, 6,6 g (0,078 eq.) IPDA dissolved in ethyl acetate were added over a period of 10 minutes. Finally, 2,29 g (0,039 eq.) 1,6-hexanediol were added, and the reaction was carried out for further 30 minutes. In the second step, a mixture of 7,7 g (0,135 eq.) DCH 99 and 2,42 g (0,029 eq.) IPDA in ethyl acetate was added over a period of 10 minutes. Thereafter, the temperature was lowered to 60-35°C, and a mixture of 10,3 g (0,180 eq.) DCH 99 and 3,53 g (0,041 eq.) IPDA in ethyl acetate was added. After a reaction time of 30 minutes, 150 g (10 wt.-%) ethanol were added to obtain a polyurethane solution.

The resulting polyurethane had the following characteristics:

| | |
|---|---|
| Dry content | 30% |
| Degree of Urethanisation | 26,4% |
| Mw | 20000-45000 Da |

### Example 2: Preparation of a white ink

The final ink was prepared by mixing the following ingredients during 20 minutes :

| | |
|---|---|
| White pigment (TiO₂, Finntitan RDI S) | 34,0 wt.-% |
| Solvents | 22 to 39 wt.-% |
| PE Wax | 2,0 wt.-% |
| Polyurethane resin of example 1 | 25 to 42 wt.-% |

As solvents, methoxy propanol, dehydrated ethanol and ethyl acetate were used.

## Claims

1. Polyurethane resin obtainable by
a) reacting an excess of one or more aliphatic diisocyanates with a group of isocyanate-reactive components consisting of one or more polyether polyols each having an average molecular weight in the range of not more than 1500 g/mol, and at least one diamine so as to obtain a prepolymer; and
b) adding a mixture of isophorone diamine and a second diamine selected from the group consisting of ethylenediamine, 1,2-diaminocyclohexane and 2,2,4- or 2,4,4-trimethyldiiaminohexane (TMDA) in excess to the free NCO groups of the prepolymer obtained in step a).

2. Polyurethane resin according to claim 1, wherein in step a) as a further isocyanate-reactive component at least one polyol having an having an average molecular weight of equal or less than 800 g/mol is added.

3. Polyurethane resin according to claim 1 or 2, wherein in step a) the ratio of equivalent weights of diisocyanate components to isocyanate-reactive components is in a range of between 3,6: 1 and 1,1:1, preferably in a range of between 2:1 and 1,1:1.

4. Polyurethane resin according to any of claims 1 to 3, wherein in step b) the ratio of the second diamine to isophorone diamine is preferably 10:1 to 2:1, especially 5:1 to 3:1.

5. Polyurethane resin according to any of claims 1 to 4, wherein in step b) the ratio of equivalent weights of the isocyanate-terminated prepolymer to the mixture of diamine components is in a range of between 1:5 and 1:1,1, preferably 1:4 and 1:1,1.

6. Polyurethane resin according to any of claims 1 to 5, having a weight average molecular weight in the range of 20000 to 80000 g/mol, preferably between 25000 to 55000 g/mol.

7. Polyurethane resin according to any of claims 1 to 6, having a degree of urethanisation between 20 and 30%.

8. Method of forming a polyurethane resin, comprising the steps of
a) reacting an excess of one or more aliphatic diisocyanates with a group of isocyanate-reactive components consisting of one or more polyether polyols each having an average molecular weight in the range of not more than 1500 g/mol, and at least one diamine so as to obtain a prepolymer; and
b) adding a mixture of isophorone diamine and a second diamine selected from the group consisting of ethylenediamine, 1,2-diaminocyclohexane and 2,2,4- or 2,4,4-trimethyldiiaminohexane (TMDA) in excess to the free NCO groups of the prepolymer obtained in step a).

9. Method according to claim 8, wherein in step b) the mixture of diamines is added to the prepolymer in two separate steps.

10. Method according to claim 9, wherein in the first step approximately one third to about 50% of said mixture of diamines is added to the prepolymer at elevated temperatures of between 60 and 90°C, and in the second step the balance of said mixture of diamines are added at about 45-50°C.

11. Method according to any of claims 8 to 10, wherein in step a) as a further isocyanate-reactive component at least one polyol having an having an average molecular weight of equal or less than 800 g/mol is added.

12. Method according to any of claims 8 to 11, wherein in step a) the isocyanate-reactive components are added sequentially to the one or more diisocyanates.

13. A coating composition, preferably printing ink, comprising a solvent and at least one polyurethane resin according to one of the claims 1 to 7 as film forming binder.

14. Use of a polyurethane resin according to claims 1 to 7 as at least one film forming binder in printing inks for printing plastic substrates, preferably polyolefinic plastic substrate.

15. Method of producing a laminate carrying a printed layer, said method comprises the steps of
a) providing a coating composition, preferably a printing ink according to claim 13;
b) applying a layer to a first substrate, preferably a plastic foil, by printing said printing ink of step a) in a flexographic and/or gravure printing process;
c) removing said solvent from said layer thereby drying and/or curing said layer obtained in step b),
d) applying an adhesive to the dried and/or cured layer obtained in step c) and producing the laminate by applying at least a second substrate, preferably a plastic foil, on the adhesive.

16. Laminate produced by the method of claim 15.

## Patentansprüche

1. Polyurethanharz, das **dadurch** erhältlich ist, daß man
a) einen Überschuß eines oder mehrerer aliphatischer Diisocyanate mit einer Gruppe von gegenüber Isocyanat reaktiven Komponenten, die aus einem oder mehreren Polyetherpolyolen, die jeweils ein durchschnittliches Molekulargewicht im Bereich von nicht mehr als 1500 g/mol aufweisen, und mindestens einem Diamin besteht, zu einem Prepolymer umsetzt und
b) eine Mischung von Isophorondiamin und einem zweiten Diamin aus der Gruppe bestehend aus Ethylendiamin, 1,2-Diaminocyclohexan und 2,2,4-oder 2,4,4-Trimethyldiaminohexan (TMDA) im Überschuß in bezug auf die freien NCO-Gruppen des in Schritt a) erhaltenen Prepolymers hinzufügt.

2. Polyurethanharz nach Anspruch 1, bei dem in Schritt a) als weitere gegenüber Isocyanat reaktive Komponente mindestens ein Polyol mit einem durchschnittlichen Molekulargewicht kleiner gleich 800 g/mol hinzugefügt wird.

3. Polyurethanharz nach Anspruch 1 oder 2, bei dem in Schritt a) das Verhältnis der Äquivalentgewichte von Diisocyanatkomponenten zu gegenüber Isocyanat reaktiven Komponenten im Bereich zwischen 3,6:1 und 1,1:1, vorzugsweise im Bereich zwischen 2:1 und 1,1:1, liegt.

4. Polyurethanharz nach einem der Ansprüche 1 bis 3, bei dem in Schritt b) das Verhältnis des zweiten Diamins zu Isophorondiamin vorzugsweise 10:1 bis 2:1, insbesondere 5:1 bis 3:1, beträgt.

5. Polyurethanharz nach einem der Ansprüche 1 bis 4, bei dem in Schritt b) das Verhältnis der Äquivalentgewichte des isocyanatterminierten Prepolymers zu der Mischung von Diaminkomponenten im Bereich zwischen 1:5 und 1:1,1, vorzugsweise im Bereich zwischen 1:4 und 1:1,1, liegt.

6. Polyurethanharz nach einem der Ansprüche 1 bis 5 mit einem gewichtsmittleren Molekulargewicht im Bereich von 20.000 bis 80.000 g/mol, vorzugsweise zwischen 25.000 und 55.000 g/mol.

7. Polyurethanharz nach einem der Ansprüche 1 bis 6 mit einem Urethanisierungsgrad zwischen 20 und 30%.

8. Verfahren zur Herstellung eines Polyurethanharzes, bei dem man:
a) einen Überschuß eines oder mehrerer aliphatischer Diisocyanate mit einer Gruppe von gegenüber Isocyanat reaktiven Komponenten, die aus einem oder mehreren Polyetherpolyolen, die jeweils ein durchschnittliches Molekulargewicht im Bereich von nicht mehr als 1500 g/mol aufweisen, und mindestens einem Diamin besteht, zu einem Prepolymer umsetzt und
b) eine Mischung von Isophorondiamin und einem zweiten Diamin aus der Gruppe bestehend aus Ethylendiamin, 1,2-Diaminocyclohexan und 2,2,4-oder 2,4,4-Trimethyldiaminohexan (TMDA) im Überschuß in bezug auf die freien NCO-Gruppen des in Schritt a) erhaltenen Prepolymers hinzufügt.

9. Verfahren nach Anspruch 8, bei dem man in Schritt b) die Mischung von Diaminen in zwei separaten Schritten zu dem Prepolymer gibt.

10. Verfahren nach Anspruch 9, bei dem man im ersten Schritt ungefähr ein Drittel bis etwa 50% der Mischung von Diaminen bei erhöhten Temperaturen zwischen 60 und 90°C und im zweiten Schritt den Rest der Mischung von Diaminen bei etwa 45-50°C zu dem Prepolymer gibt.

11. Verfahren nach einem der Ansprüche 8 bis 10, bei dem man in Schritt a) als weitere gegenüber Isocyanat reaktive Komponente mindestens ein Polyol mit einem durchschnittlichen Molekulargewicht kleiner gleich 800 g/mol hinzufügt.

12. Verfahren nach einem der Ansprüche 8 bis 11, bei dem man in Schritt a) die gegenüber Isocyanat reaktiven Komponenten sequentiell zu dem Diisocyanat bzw. den Diisocyanaten gibt.

13. Beschichtungszusammensetzung, vorzugsweise Druckfarbe, enthaltend ein Lösungsmittel und mindestens ein Polyurethanharz gemäß einem der Ansprüche 1 bis 7 als filmbildendes Bindemittel.

14. Verwendung eines Polyurethanharzes gemäß einem der Ansprüche 1 bis 7 als mindestens ein filmbildendes Bindemittel in Druckfarben zum Bedrucken von Kunststoffsubstraten, vorzugsweise polyolefinischem Kunststoffsubstrat.

15. Verfahren zur Herstellung eines Laminats mit einer aufgedruckten Schicht, bei dem man:
a) eine Beschichtungszusammensetzung, vorzugsweise eine Druckfarbe, gemäß Anspruch 13 bereitstellt;
b) auf ein erstes Substrat, vorzugsweise eine Kunststoffolie, eine Schicht aufbringt, indem man die Druckfarbe aus Schritt a) in einem Flexo- und/oder Tiefdruckverfahren aufdruckt;
c) das Lösungsmittel aus der Schicht entfernt und **dadurch** die in Schritt b) erhaltene Schicht trocknet und/oder härtet; und
d) auf die in Schritt c) erhaltene getrocknete und/oder gehärtete Schicht einen Klebstoff aufbringt und durch Aufbringen mindestens eines zweiten Substrats, vorzugsweise einer Kunststoffolie, auf den Klebstoff das Laminat herstellt.

16. Nach dem Verfahren gemäß Anspruch 15 hergestelltes Laminat.

## Revendications

1. Résine polyuréthane pouvant être obtenu par
a) la réaction d'un excès d'un ou plusieurs diisocyanate(s) aliphatique(s) avec un groupe de composants réagissant avec un isocyanate, constitué par un ou plusieurs polyéther polyol(s), ayant chacun un poids moléculaire moyen dans une plage non supérieure à 1500 g/mole, et au moins une diamine de façon à obtenir un prépolymère ; et
b) l'addition d'un mélange d'isophorone diamine et d'une seconde diamine choisie dans le groupe constitué par l'éthylènediamine, le 1,2-diaminocyclohexane et le 2,2,4- ou le 2,4,4-triméthyldiaminohexane (TMDA) en excès par rapport aux groupes NCO libres du prépolymère obtenu dans l'étape a).

2. Résine polyuréthane selon la revendication 1, dans laquelle dans l'étape a), est ajouté en tant qu'autre composant réagissant avec un isocyanate, au moins un polyol ayant un poids moléculaire moyen égal ou inférieur à 800 g/mole.

3. Résine polyuréthane selon la revendication 1 ou 2, dans laquelle dans l'étape a), le rapport des poids équivalents des composants diisocyanates sur les composants réagissant avec un isocyanate est dans la plage comprise entre 3,6 : 1 et 1,1 : 1, de préférence dans une plage comprise entre 2 : 1 et 1,1 : 1.

4. Résine polyuréthane selon l'une quelconque des revendications 1 à 3, dans laquelle dans l'étape b), le rapport de la seconde diamine sur l'isophorone diamine est de préférence de 10 : 1 à 2 : 1, spécialement de 5 : 1 à 3 : 1.

5. Résine polyuréthane selon l'une quelconque des revendications 1 à 4, dans laquelle dans l'étape b), le rapport des poids équivalents du prépolymère terminé par isocyanate sur le mélange des composants diamines est dans une plage comprise entre 1 : 5 et 1 : 1,1, de préférence entre 1 : 4 et 1 : 1,1.

6. Résine polyuréthane selon l'une quelconque des revendications 1 à 5, ayant un poids moléculaire moyen en poids dans la plage de 20000 et 80000 g/mole, de préférence entre 25000 et 55000 g/mole.

7. Résine polyuréthane selon l'une quelconque des revendications 1 à 6, ayant un indice d'uréthanisation compris entre 20 et 30%.

8. Procédé de formation d'une résine polyuréthane, comprenant les étapes consistant à
a) faire réagir un excès d'un ou plusieurs diisocyanate(s) aliphatique(s) avec un groupe de composants réagissant avec un isocyanate, constitué par un ou plusieurs polyéther polyol(s), ayant chacun un poids moléculaire moyen dans une plage non supérieure à 1500 g/mole, et au moins une diamine de façon à obtenir un prépolymère ; et
b) ajouter un mélange d'isophorone diamine et d'une seconde diamine choisie dans le groupe constitué par l'éthylènediamine, le 1,2-diaminocyclohexane et le 2,2,4- ou le 2,4,4-triméthyldiaminohexane (TMDA), en excès par rapport aux groupes NCO libres du prépolymère obtenu dans l'étape a).

9. Procédé selon la revendication 8, dans lequel dans l'étape b), le mélange de diamines est ajouté au prépolymère en deux étapes séparées.

10. Procédé selon la revendication 9, dans lequel dans la première étape approximativement un tiers à environ 50% dudit mélange de diamines est ajouté au prépolymère à des températures élevées comprises entre 60 et 90°C, et dans la seconde étape le reste dudit mélange de diamines est ajouté à environ 45-50°C.

11. Procédé selon l'une quelconque des revendications 8 à 10, dans lequel dans l'étape a) est ajouté en tant qu'autre composant réagissant avec un isocyanate au moins un polyol ayant un poids moléculaire moyen égal ou inférieur à 800 g/mole.

12. Procédé selon l'une quelconque des revendications 8 à 11, dans lequel dans l'étape a) les composants réagissant avec un isocyanate sont ajoutés en séquence à un ou plusieurs diisocyanate(s).

13. Composition de revêtement, de préférence encre d'imprimerie, comprenant un solvant et au moins une résine polyuréthane selon l'une quelconque des revendications 1 à 7 en tant que liant filmogène.

14. Utilisation d'une résine polyuréthane selon les revendications 1 à 7 en tant qu'au moins un liant filmogène, dans des encres d'imprimerie pour former des impressions sur des substrats en matière plastique, de préférence un substrat en matière plastique polyoléfinique.

15. Procédé de production d'un stratifié portant une couche appliquée par impression, ledit procédé comprend les étapes consistant à
a) obtenir une composition de revêtement, de préférence une encre d'imprimerie selon la revendication 13 ;
b) appliquer une couche sur un premier substrat, de préférence une feuille en matière plastique, en appliquant par impression ladite encre d'imprimerie de l'étape a) avec un procédé flexographique et/ou d'impression par gravure ;
c) éliminer ledit solvant de ladite couche en séchant et/ou en durcissant ainsi ladite couche obtenue dans l'étape b),
d) appliquer un adhésif sur la couche séchée et/ou durcie obtenue dans l'étape c) et produire le stratifié en appliquant au moins un second substrat, de préférence un feuille en matière plastique, sur l'adhésif.

16. Stratifié produit selon le procédé de la revendication 15.
